# EUROPEAN PATENT APPLICATION

(11) **EP 4 671 552 A1**
(43) Date of publication of application: **31.12.2025**
(21) Application number: 24850470.6
(22) Date of filing: 01.03.2024
(51) Int. Cl.: F16C 11/04, G06F 1/16

(54) **HINGE ASSEMBLY AND ELECTRONIC DEVICE**

(30) Priority: 09.08.2023 CN 202311002260
(71) Applicant: Honor Device Co., Ltd., Shenzhen, Guangdong 518040 (CN)
(72) Inventor: WEI, Yaru, Shenzhen, Guangdong 518040 (CN); TANG, Feng, Shenzhen, Guangdong 518040 (CN); HUO, Guoliang, Shenzhen, Guangdong 518040 (CN)
(74) Representative: Thun, Clemens
(86) International application number: PCT/CN2024/079623
(87) International publication number: WO 2025/030810

(57) **Abstract**

This application provides a hinge assembly and an electronic device, related to the technical field of electronic devices, and used to resolve a problem that a structure of an existing hinge assembly is complex and a volume is large, which is not conducive to thinning and lightening of an electronic device. The hinge assembly includes a base, a rotating base, a rotating assembly, and a fastening base. The base is configured to be fixedly connected to a first portion. The rotating base is configured to be fixedly connected to a second component. The rotating assembly includes a rotating shaft and a through hole, one of the rotating shaft and the through hole is disposed on the base, the other of the rotating shaft and the through hole is disposed on the rotating base, and the rotating shaft is inserted into the through hole, so that the base is rotatably connected to the rotating base. A shaft hole is provided on the fastening base, an end portion of the rotating shaft is inserted into the shaft hole, and the rotating shaft is in interference fit with the shaft hole.

## Description

This application claims priority to Chinese Patent Application No. 202311002260.8, filed with the China National Intellectual Property Administration on August 9, 2023 and entitled "HINGE ASSEMBLY AND ELECTRONIC DEVICE", which is incorporated herein by reference in its entirety.

### TECHNICAL FIELD

This application relates to the technical field of electronic devices, and in particular, to a hinge assembly and an electronic device.

### BACKGROUND

Foldable electronic devices (for example, notebook computers) are increasingly favored by users due to portability brought because they are foldable.

A notebook computer includes a display portion and a keyboard portion. The display portion and the keyboard portion are rotatably connected through a hinge assembly, so that the display portion can rotate relative to the keyboard portion, thereby realizing folding.

However, a hinge assembly of an existing notebook computer has a relatively large quantity of components and a complex structure, resulting in a relatively large overall volume, which is not conducive to thinning and lightening of an electronic device.

### SUMMARY

Embodiments of this application provide a hinge assembly and an electronic device, to resolve a problem that a structure of an existing hinge assembly is complex and a volume is large, which is not conducive to thinning and lightening of an electronic device.

To achieve the foregoing objective, the following technical solutions are used in embodiments of this application.

According to a first aspect, a hinge assembly is provided, where the hinge assembly includes a base, a rotating base, a rotating assembly, and a fastening base. The base is configured to be fixedly connected to a first portion. The rotating base is configured to be fixedly connected to a second component. The rotating assembly includes a rotating shaft and a through hole, one of the rotating shaft and the through hole is disposed on the base, the other of the rotating shaft and the through hole is disposed on the rotating base, and the rotating shaft is inserted into the through hole, so that the base is rotatably connected to the rotating base. A shaft hole is provided on the fastening base, an end portion of the rotating shaft is inserted into the shaft hole, and the rotating shaft is in interference fit with the shaft hole.

In the hinge assembly according to the first aspect of this application, the base thereof is configured to be fixedly connected to the first component, for example, a keyboard portion of a notebook computer. The rotating base is configured to be fixedly connected to the second component, for example, a display portion of the notebook computer. In addition, a rotary connection is implemented between the rotating base and the base through the rotating assembly, that is, the rotating shaft and the shaft hole, so that the display portion and the keyboard portion of the notebook computer rotate relative to each other. In addition, the fastening base is disposed at the end portion of the rotating shaft, the fastening base is fixedly connected to the base, the shaft hole is provided on the fastening base, and the rotating shaft is in interference fit with the shaft hole, that is, a friction force generated when the rotating shaft and the shaft hole rotate relatively to each other can form a damping force. Thus, an overall quantity of parts is relatively small. Therefore, an overall quantity of parts of the hinge assembly is relatively small, which helps reduce an overall volume of the hinge assembly, and facilitates thinning and lightening of the electronic device.

In addition, in an installation process, the rotating base may be first installed on the base, that is, two ends of the rotating shaft are respectively inserted into the through hole in the base, to implement a rotary connection between the rotating base and the base. Next, the fastening base is installed at the end portion of the rotating shaft, and the shaft hole on the fastening base is in tight fit with the rotating shaft, that is, an interference allowance exists between the shaft hole and the rotating shaft, and the fastening base is fixedly connected to the base. In this way, difficulty of assembling the hinge assembly is reduced, so as to reduce a risk that the shaft hole fails to be in tight fit with the rotating shaft during installation.

In a possible implementation of the first aspect of this application, the shaft hole extends in a radial direction and runs through a surface of the fastening base to form a notch. In this way, a weight of the fastening base can be reduced, and a weight of the hinge assembly can be reduced, facilitating thinning and lightening of the electronic device.

In a possible implementation of the first aspect of this application, in a vertical direction, a highest point of the fastening base is lower than a highest point of the rotating shaft. In this structure, when the rotating shaft is in tight fit with the shaft hole, and an interference allowance exists between the rotating shaft and the shaft hole, a size of the hinge assembly in the vertical direction (that is, a thickness direction of the keyboard portion) can be reduced, thereby facilitating thinning and lightening of the electronic device.

In a possible implementation of the first aspect of this application, two fastening bases are disposed, the two fastening bases are disposed on two sides of the base along an axial direction of the rotating shaft, and both ends of the rotating shaft are respectively inserted into the shaft holes on the two fastening bases. In this way, a force balance of the hinge assembly is facilitated, so that reliability of an integral structure can be improved.

In a possible implementation of the first aspect of this application, the through hole extends in a radial direction of the rotating shaft and runs through a side wall of the base. In this way, when the rotating base is installed on the base, only the rotating shaft on the rotating base needs to be fitted into the through hole in a radial direction of the through hole, so that a rotary connection between the rotating base and the base can be implemented, and installation is simpler.

In a possible implementation of the first aspect of this application, the base includes a first portion and two second portions, the two second portions are respectively disposed at two ends of the first portion along a first direction, the second portion is fixedly connected to the first portion, and the through hole is provided on the second portion. The first direction is parallel to an axis of the rotating shaft. The rotating shaft is fastened to the rotating base, and two ends of the rotating shaft are respectively inserted into the through holes on the two second portions. In this way, a space enclosed by the first portion and the second portions of the base can accommodate a part on which the rotating shaft is disposed on the rotating base, which helps improve integration of the hinge assembly formed by the base and the rotating base, that is, further reduces an overall volume of the hinge assembly.

In a possible implementation of the first aspect of this application, the base further includes a third portion, the third portion is fixedly disposed on each of surfaces of the two second portions facing away from each other, and the third portion is configured to be fixedly connected to the first component. In this way, the third portion is disposed on both sides of the two second portions that are symmetrical, so that when the base and the first component are fastened, an overall force is more balanced, thereby improving reliability of connection between the base and the first component.

In a possible implementation of the first aspect of this application, the rotating base includes an arcuate portion and a first connecting portion, an axis of the arcuate portion is parallel to the axis of the rotating shaft, and the first connecting portion extends in a direction close to the axis of the arcuate portion; and along a circumferential direction of the arcuate portion, a first end of the arcuate portion is fixedly connected to the first connecting portion, the rotating shaft is fastened to the first connecting portion, and a second end of the arcuate portion is configured to be fixedly connected to the second component. In this structure, in a rotation process of the arcuate portion of the rotating base, because a surface of the arcuate portion is an arc surface structure, a distance between the arcuate portion and a structural member disposed adjacently can be kept unchanged, so that an avoidance space that is disposed inside the first component and that is configured to avoid the rotating base can be reduced.

In a possible implementation of the first aspect of this application, the axis of the arcuate portion coincides with the axis of the rotating shaft. In this way, the arcuate portion can be rotated around the axis of the arcuate portion. In a rotation process, a distance between the arcuate portion and the first portion of the base can be kept unchanged, so that the distance between the arcuate portion and the first portion of the base can be reduced, to improve integration between the base and the rotating base, thereby further reducing the volume of the hinge assembly.

In a possible implementation of the first aspect of this application, the rotating base further includes a second connecting portion, the second connecting portion is fastened to the second end of the arcuate portion, and the second connecting portion is configured to be fixedly connected to the second component. In this structure, the second connecting portion may extend in a direction away from the axis of the arcuate portion, and be fixedly connected to the second component, to implement a rotary connection between the second component and the first component.

In a possible implementation of the first aspect of this application, an avoidance hole is provided on the first connecting portion. In this structure, the avoidance hole may avoid a flexible connecting member configured to implement an electrical connection between the first component and the second component, so as to avoid excessive bending of the flexible connecting member and reduce a risk of damage caused by excessive bending of the flexible connecting member.

In a possible implementation of the first aspect of this application, the rotating base further includes an arcuate plate, the arcuate plate is disposed on an inner side of the arcuate portion, the arcuate plate is fixedly connected to the arcuate portion, a clearance space exists between the arcuate plate and an inner wall of the arcuate portion, and the clearance space extends from the first end of the arcuate portion to the second end of the arcuate portion; and an end portion of the clearance space close to the first end of the arcuate portion is opposite to the avoidance hole, and the clearance space communicates with the avoidance hole. In this way, the flexible connecting member can be disposed inside the clearance space, so that the flexible connecting member can be effectively protected while implementing an electrical connection between the first component and the second component.

In a possible implementation of the first aspect of this application, the shaft hole is provided on the base, the rotating shaft is disposed on the rotating base, and the rotating shaft is formed integrally with the rotating base. In this structure, connection strength between the rotating base and the rotating shaft is improved.

In a possible implementation of the first aspect of this application, the positioning shaft and the positioning hole are disposed between the base and the fastening base, one of the positioning shaft and the positioning hole is disposed on the base, the other of the positioning shaft and the positioning hole is disposed on the fastening base, and the positioning shaft is inserted into the positioning hole. In this structure, the base and the fastening base can be pre-positioned to improve installation precision and reduce installation difficulty.

In a possible implementation of the first aspect of this application, a plurality of groups of positioning shafts and positioning holes are disposed between the base and the fastening base. In this way, relative movement between the base and the fastening base along a plane perpendicular to the positioning shaft can be prevented by plug-in fit between the plurality of groups of positioning shafts and positioning holes, thereby further improving installation precision.

In a possible implementation of the first aspect of this application, a groove is provided on at least one of an outer wall of the rotating shaft facing the shaft hole and an inner wall of the shaft hole facing the rotating shaft, and the groove is configured to add a lubricating material. In this way, relative rotation between the rotating shaft and the shaft hole is smoother, and user experience is improved.

According to a second aspect, an electronic device is provided, where the electronic device includes a keyboard portion, a display portion, and a hinge assembly. The hinge assembly is the hinge assembly according to any one of the foregoing technical solutions, a base of the hinge assembly is fixedly connected to the keyboard portion, and a rotating base of the hinge assembly is fixedly connected to the display portion.

The electronic device according to the second aspect of this application includes the hinge assembly according to any one of the technical solutions. Therefore, the same technical problem can be resolved, and the same technical effect can be achieved.

In a possible implementation of the second aspect of this application, the keyboard portion includes a first region and a second region, and a thickness size of the first region is less than a thickness size of the second region. When the display portion and the keyboard portion are engaged with each other, the display portion is stacked with the first region. In this structure, an overall thickness of the electronic device is reduced, that is, a part of components are accommodated in the second region, thereby reducing a thickness of the first region.

In a possible implementation of the second aspect of this application, a sum of a thickness of the display portion and a thickness of the first region is equal to a thickness of the second region. In this way, when the electronic device is in a folded state, a surface that is of the display portion and away from the first region can be flush with the second region, which is conducive to overall aesthetics.

In a possible implementation of the second aspect of this application, an interface module is disposed in the second region, and a socket of the interface module is disposed on a surface of the second region away from the first region. In this structure, components disposed in the first region can be reduced, so as to reduce the thickness of the first region, thereby facilitating thinning and lightening of the electronic device.

In a possible implementation of the second aspect of this application, a plurality of hinge assemblies are disposed, and the plurality of hinge assemblies are spaced apart along a rotation axis between the display portion and the keyboard portion. In this structure, there are a plurality of connection points between the display portion and the keyboard portion by using the plurality of hinge assemblies, which helps improve reliability of a rotary connection between the display portion and the keyboard portion.

### BRIEF DESCRIPTION OF DRAWINGS

FIG. 1 is a structural diagram of an electronic device (in an unfolded state) according to an embodiment of this application;
FIG. 2 is a structural diagram of an electronic device (in a folded state) according to an embodiment of this application;
FIG. 3 is a partial structural diagram of an electronic device in a folded state according to an embodiment of this application;
FIG. 4 is an exploded view of an electronic device according to an embodiment of this application;
FIG. 5 is a structural diagram of a hinge assembly according to an embodiment of this application;
FIG. 6 is an exploded view of the hinge assembly according to FIG. 5;
FIG. 7 is a structural diagram of the hinge assembly in another state according to FIG. 5;
FIG. 8 is a structural diagram of another rotating shaft according to an embodiment of this application;
FIG. 9 is a partial cross-sectional structural diagram of the rotating shaft according to FIG. 8 and a shaft hole;
FIG. 10 is a partial structural diagram of an electronic device in a folded state according to an embodiment of this application;
FIG. 11 is a partial structural diagram of an electronic device in an unfolded state according to an embodiment of this application;
FIG. 12 is an exploded view of another base in a hinge assembly according to an embodiment of this application;
FIG. 13 is a structural diagram of the hinge assembly according to FIG. 12;
FIG. 14 is a partial structural diagram of another electronic device (including the hinge assembly according to FIG. 13) according to an embodiment of this application;
FIG. 15 is a structural enlarged view of a region A of FIG. 14;
FIG. 16 is a partial structural enlarged view of still another electronic device according to an embodiment of this application;
FIG. 17 is an exploded view of still another base in a hinge assembly according to an embodiment of this application;
FIG. 18 is an exploded view of still another base in a hinge assembly according to an embodiment of this application;
FIG. 19 is a structural diagram of still another electronic device (including the hinge assembly according to FIG. 18) according to an embodiment of this application;
FIG. 20 is a structural diagram of a rotating base in a hinge assembly according to an embodiment of this application;
FIG. 21 is a cross-sectional structural diagram of the rotating base according to FIG. 20 and a base that are assembled;
FIG. 22 is a partial structural assembly diagram of the hinge assembly according to FIG. 20, a display portion, and a keyboard portion;
FIG. 23 is an exploded view of another hinge assembly according to an embodiment of this application;
FIG. 24 is a cross-sectional structural diagram of the hinge assembly according to FIG. 23; and
FIG. 25 is an exploded view of another rotating base according to an embodiment of this application.

Reference numerals: 01-electronic device; 10-display portion; 11-upper cover; 12-display screen; 20-keyboard portion; 20a-first region; 20b-second region; 21-keyboard; 22-top case; 23-bottom case; 23a-stud; 23b-threaded hole; 30-hinge assembly; 100-base; 110-first portion; 120-second portion; 121-positioning shaft; 130-third portion; 131-installation hole; 200-rotating base; 210-arcuate portion; 211-arcuate groove; 220-first connecting portion; 221-avoidance hole; 230-second connecting portion; 240-arcuate plate; 250-clearance space; 300-rotating assembly; 310-rotating shaft; 311-groove; 320-through hole; 400-fastening base; 410-shaft hole; 420-positioning hole.

### DESCRIPTION OF EMBODIMENTS

The following describes technical solutions in embodiments of this application with reference to the accompanying drawings in the embodiments of this application. It is clear that the described embodiments are some but not all of the embodiments of this application.

The terms "first" and "second" below are merely intended for a purpose of description, and shall not be understood as an indication or implication of relative importance or implicit indication of a quantity of indicated technical features. Therefore, a feature defined by "first", "second", and the like may explicitly or implicitly include one or more such features.

In addition, in this application, orientation terms such as "upper" and "lower" are defined relative to the orientations in which components in the accompanying drawings are schematically placed. It should be understood that these orientation terms are relative concepts, are used for relative description and clarification, and may be correspondingly changed based on changes in the orientations in which the components are placed in the accompanying drawings.

In this application, unless otherwise specified and defined, the term "connection" should be understood in a broad sense. For example, a "connection" may be a fixed connection, may be a detachable connection, or may be integration, and may be a direct connection or an indirect connection implemented by using an intermediate medium.

An embodiment of this application provides an electronic device. The electronic device is a foldable terminal device. For example, the electronic device may be a notebook computer. The following examples are provided using a notebook computer as an example of the electronic device.

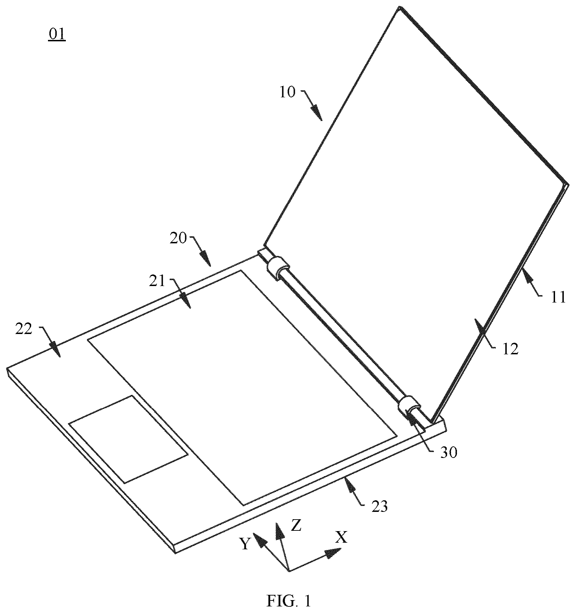

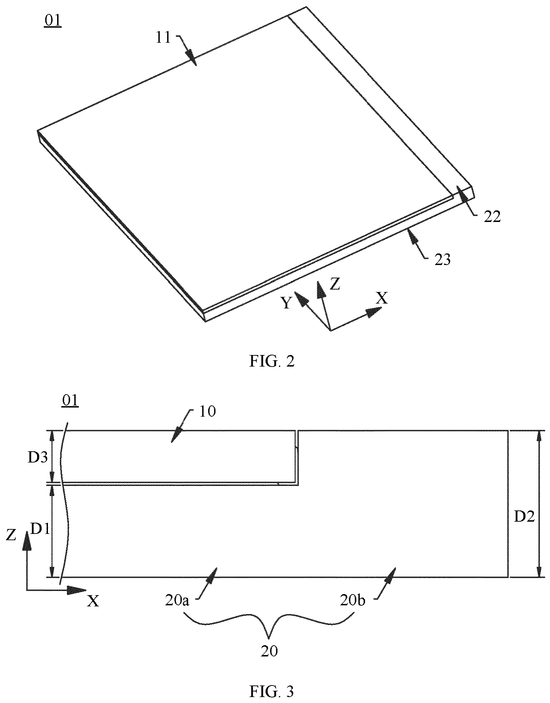

Specifically, referring to FIG. 1 and FIG. 2, FIG. 1 is a structural diagram of an electronic device 01 (in an unfolded state) according to an embodiment of this application, and FIG. 2 is a structural diagram of an electronic device 01 (in a folded state) according to an embodiment of this application. The electronic device 01 may include a display portion 10, a keyboard portion 20, and a hinge assembly 30.

To facilitate description of the following, an XYZ coordinate system is established. A width direction of the electronic device 01 is defined as an X-axis direction, a length direction of the electronic device 01 is defined as a Y-axis direction, and a thickness direction of the electronic device 01 is defined as a Z-axis direction. It may be understood that the coordinate system of the electronic device 01 may be flexibly set according to an actual requirement. This application only provides an example, which cannot be considered as a special limitation to this application.

It may be understood that FIG. 1 and FIG. 2 show only an example of some parts included in the electronic device 01. Actual shapes, actual sizes, actual positions, and actual constructions of these parts are not limited by those in FIG. 1 and FIG. 2.

The display portion 10 is configured to display an image, a video, and the like. The display portion 10 may include an upper cover 11 and a display screen 12. The display screen 12 is fastened to the upper cover 11. For example, the display screen 12 may be fastened to the upper cover 11 by means of adhesion or snap-fit connection. In addition, the display screen 12 is disposed on a side on which the upper cover 11 is close to the keyboard portion 20. The upper cover 11 may be made of a metal material, or may be made of a plastic material. Therefore, a material of the upper cover 11 is not specifically limited in this application.

In addition, a flexible display screen or a rigid display screen may be used as the display screen 12. For example, the display screen 12 may be an organic light-emitting diode (organic light-emitting diode, OLED) display screen, an active-matrix organic light-emitting diode or an active-matrix organic light-emitting diode (active-matrix organic light-emitting diode, AMOLED) display screen, a mini organic light-emitting diode (mini organic light-emitting diode) display screen, a micro organic light-emitting diode (micro organic light-emitting diode) display screen, a micro organic light-emitting diode (micro organic light-emitting diode) display screen, a quantum dot light emitting diode (quantum dot light emitting diodes, QLED) display screen, or a liquid crystal display (liquid crystal display, LCD) display screen.

The keyboard portion 20 is configured to edit or perform another operation on content displayed on the display screen 12. The keyboard portion 20 may include a keyboard 21, a top case 22, and a bottom case 23. The keyboard 21 is fastened to the top case 22, and the top case 22 and the bottom case 23 are fixedly connected. For example, the top case 22 and the bottom case 23 may be fixedly connected by means of adhesion, snap-fit connection, threaded connection, or welding. An accommodation space is formed between the top case 22 and the bottom case 23, and the accommodation space is configured to dispose electronic components such as a mainboard, a CPU (central processing unit, central processing unit), a graphics card, a memory, and a fan.

In addition, the keyboard 21 is electrically connected to the mainboard, and the display screen 12 is electrically connected to the mainboard through a flexible connecting member (not shown in the figure), for example, an FPC board (Flexible Printed Circuit, flexible printed circuit), so that content displayed on the display screen 12 can be edited by using the keyboard 21.

The hinge assembly 30 is configured to connect the display portion 10 and the keyboard portion 20, so that the display portion 10 and the keyboard portion 20 can rotate relative to each other, thereby enabling the electronic device 01 to switch between a folded state and an unfolded state. In a case that the electronic device 01 is in a folded state (as shown in FIG. 2), the display portion 10 and the keyboard portion 20 are engaged with each other, the display screen 12 and the keyboard 21 are disposed opposite to each other, and both the display screen 12 and the keyboard 21 are located between the upper cover 11 and the bottom case 23, thereby providing effective protection for the display screen 12 and the keyboard 21. In this state, the electronic device 01 forms an approximate plate-like structure, which is easy to carry.

In a case that the electronic device 01 is in an unfolded state (as shown in FIG. 1), the display portion 10 rotates in a direction away from the keyboard portion 20, so that an included angle is formed between the display portion 10 and the keyboard portion 20, and the display screen 12 and the keyboard 21 are separated. A user can view an image displayed on the display screen 12, and perform an operation by using the keyboard 21.

To improve user experience, the hinge assembly 30 can further provide a damping force, so that in an unfolding process of the electronic device 01, the display portion 10 can be kept at different positions, so as to adapt to different use scenarios, thereby improving user experience.

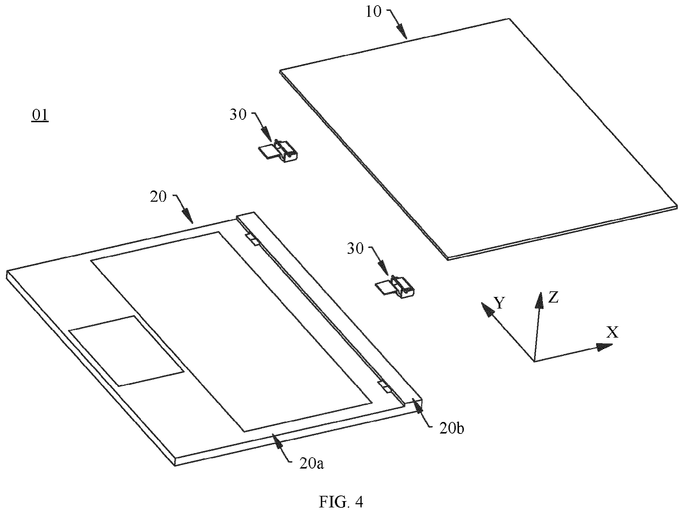

In addition, to make the electronic device 01 tend to be thinner and lighter, refer to FIG. 3 and FIG. 4. FIG. 3 is a partial structural diagram of the electronic device 01 in a folded state according to an embodiment of this application. FIG. 4 is an exploded view of the electronic device 01 according to an embodiment of this application. In the electronic device 01, the keyboard portion 20 may include a first region 20a and a second region 20b. A thickness size D1 of the first region 20a is less than a thickness size D2 of the second region 20b, and the keyboard 21 is located in the first region 20a.

In addition, when the electronic device 01 is in a folded state, the display portion 10 is stacked with the first region 20a of the keyboard portion 20, that is, the display portion 10 covers only the first region 20a of the keyboard portion 20, and a sum of a thickness of the display portion 10 and a thickness of the first region 20a may be equal to a thickness of the second region 20b, that is, a thickness D3 of the display portion 10 plus the thickness D1 of the first region 20a is equal to the thickness D2 of the second region 20b. In this structure, the hinge assembly 30 may be disposed at a junction between the first region 20a and the second region 20b of the keyboard portion 20.

In this way, an interface module (for example, a USB interface module and a Type-C interface module, which are not shown in the figure) disposed on the keyboard portion 20 may be disposed in the second region 20b, and a socket of the interface module is disposed on a rear side of the keyboard portion 20 (that is, a surface of the second region 20b away from the first region 20a), so that the thickness size of the first region 20a can be reduced, thereby facilitating thinning and lightening of the electronic device 01.

However, the hinge assembly 30 provided in the related art generally has a complex structure, which causes a large overall volume of the hinge assembly 30, which is not conducive to thinning and lightening of the electronic device 01.

To resolve the foregoing problem, an embodiment of this application provides a hinge assembly 30, and the hinge assembly 30 is applied to the electronic device 01. One or more hinge assemblies 30 may be disposed. For example, a plurality of hinge assemblies 30 may be spaced apart along a rotation axis between the display portion 10 and the keyboard portion 20, so that a plurality of connection points exist between the display portion 10 and the keyboard portion 20, thereby facilitating overall force balance. In this embodiment, as shown in FIG. 1, that two hinge assemblies 30 are disposed between the display portion 10 and the keyboard portion 20 is used as an example for description.

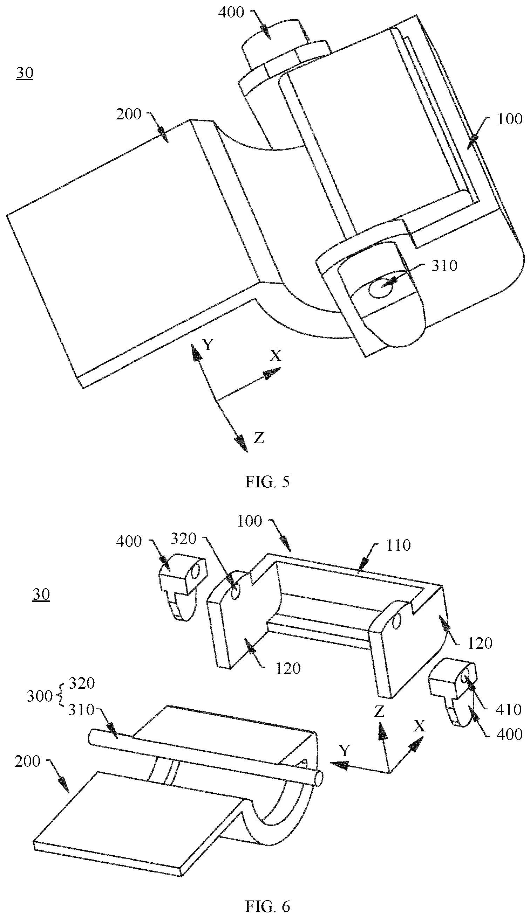

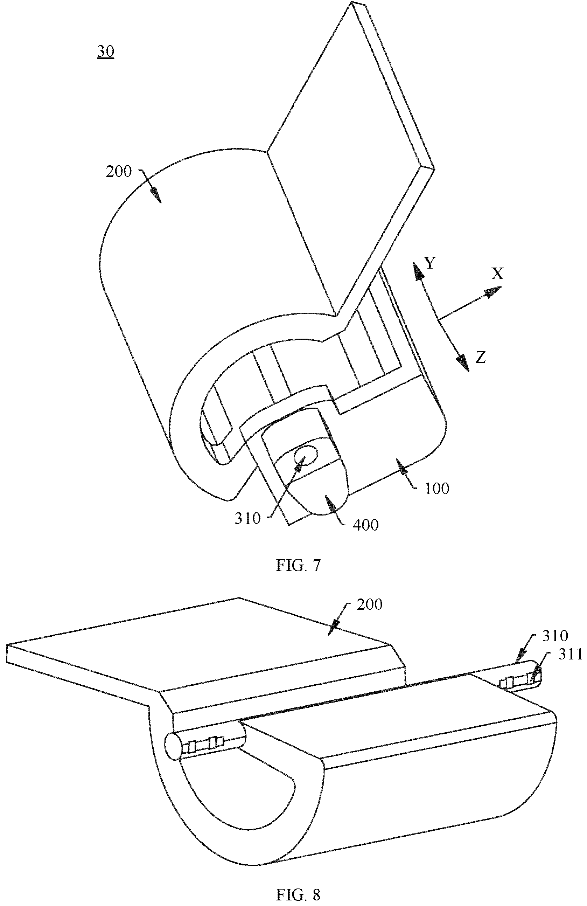

Referring to FIG. 5, FIG. 6, and FIG. 7, FIG. 5 is a structural diagram of the hinge assembly 30 according to an embodiment of this application. FIG. 6 is an exploded view of the hinge assembly 30 according to FIG. 5. FIG. 7 is a structural diagram of the hinge assembly 30 in another state according to FIG. 5. The hinge assembly 30 shown in FIG. 5 is a structure in which the electronic device 01 is in a folded state (as shown in FIG. 2), and the hinge assembly 30 shown in FIG. 7 is a structure in which the electronic device 01 is in an unfolded state (as shown in FIG. 1). The hinge assembly 30 may include a base 100, a rotating base 200, and a rotating assembly 300.

The base 100 is configured to be fixedly connected to a first component formed by the keyboard portion 20 shown in FIG. 1. The rotating base 200 is configured to be fixedly connected to a second component formed by the display portion 10 shown in FIG. 1. The rotating assembly 300 may include a rotating shaft 310 and a through hole 320, one of the rotating shaft 310 and the through hole 320 is disposed on the base 100, and the other of the rotating shaft 310 and the through hole 320 is disposed on the rotating base 200. The rotating shaft 310 is inserted into the through hole, so that the base 100 is rotatably connected to the rotating base 200, that is, the display portion 10 is rotatably connected to the keyboard portion 20.

In some embodiments, the rotating shaft 310 may be disposed on the rotating base 200, and the through hole 320 may be provided on the base 100. For example, referring to FIG. 5, FIG. 6, and FIG. 7, the base 100 may include a first portion 110 and two second portions 120. The two second portions 120 are respectively disposed at two ends of the first portion 110 in a first direction, the second portion 120 is fixedly connected to the first portion 110, and the through hole 320 is provided on the second portion 120. The first direction is parallel to an axis of the rotating shaft 310, that is, the first direction is the Y-axis direction.

For example, the first portion 110 and the two second portions 120 are all plate-like structures, and the first portion 110 and the two second portions 120 are all disposed perpendicularly to each other (for example, the first portion 110 is parallel to a YZ plane and the second portion 120 is parallel to an XZ plane). In an XY plane, a part of the rotating base 200 extends into a space enclosed by the two second portions 120 and the first portion 110, that is, a part of the rotating base 200 is located between the two second portions 120.

The second portion 120 and the first portion 110 may be fastened by means of adhesion, snap-fit connection, welding, threaded connection, or the like, or the second portion 120 and the first portion 110 may be integrally formed as one structural member. Therefore, this is not specifically limited in this application.

In addition, a part of the rotating base 200 is disposed between the two second portions 120, and the rotating shaft 310 is fastened on a side wall of the rotating base 200 facing the second portion 120. Two ends of the rotating shaft 310 are respectively inserted into through holes 320 provided on corresponding second portions 120, to implement a rotary connection between the rotating base 200 and the base 100.

Based on this, to enable the display portion 10 to form any included angle with the keyboard portion, that is, the display portion 10 can be kept at any position, refer to FIG. 5, FIG. 6, and FIG. 7. The hinge assembly 30 further includes a fastening base 400. The fastening base 400 is disposed on both sides of the base along an axial direction (that is, the Y-axis direction) of the rotating shaft 310. A shaft hole 410 is provided on the fastening base 400, and two ends of the rotating shaft 310 are respectively inserted into shaft holes 410 on corresponding fastening bases 400. In addition, the rotating shaft 310 is in interference fit with the shaft hole 410.

The rotating shaft 310 is in interference fit with the shaft hole 410. Therefore, in a process of relative rotation between the base 100 and the rotating base 200, a friction force generated between the rotating shaft 310 and the shaft hole 410 can form a damping force. In addition, in this embodiment, the axis of the rotating shaft 310 is parallel to the Y-axis direction.

For example, in a circumferential direction of the rotating shaft 310, an outer wall of the rotating shaft 310 and an inner wall of the shaft hole 410 are fully fitted together with an interference allowance, that is, interference fit, so that a friction force is generated by relative rotation between the rotating shaft 310 and the shaft hole 410, thereby forming a damping force.

Alternatively, a protruding structure may be formed on an outer wall of the rotating shaft 310, and an interference allowance is formed between the protruding structure and an inner wall of the shaft hole 410, that is, interference fit is formed between the outer wall of the rotating shaft 310 and a partial region of the inner wall of the shaft hole 410, so that a friction force is generated by relative rotation between the rotating shaft 310 and the shaft hole 410, thereby forming a damping force.

It may be understood that one or more protruding structures may be disposed. In addition, the protruding structure may be further disposed on the inner wall of the shaft hole 410. Therefore, this application sets no special limitation on a specific structure of interference fit between the rotating shaft 310 and the shaft hole 410.

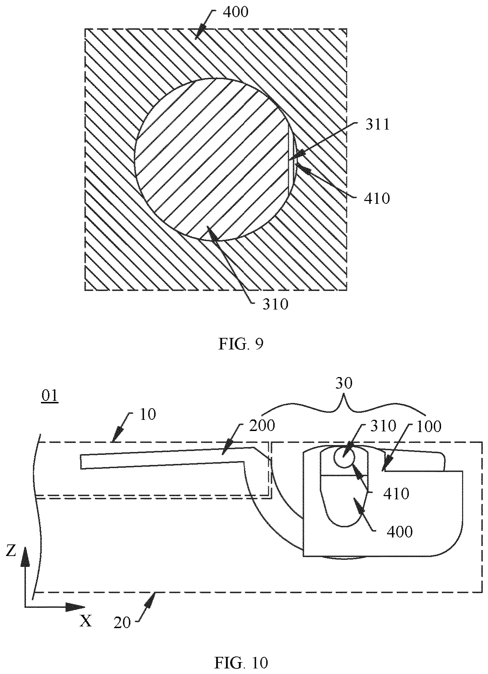

In addition, to enable smoother relative rotation between the rotating shaft 310 and the shaft hole 410, a lubricating material may be added between the rotating shaft 310 and the shaft hole 410 according to an embodiment of this application. For example, referring to FIG. 8 and FIG. 9, FIG. 8 is a structural diagram of another rotating shaft 310 according to an embodiment of this application, and FIG. 9 is a partial cross-sectional structural diagram of the rotating shaft 310 according to FIG. 8 and the shaft hole 410. A groove 311 may be provided on at least one of the outer wall of the rotating shaft 310 or the inner wall of the shaft hole 410. The groove 311 is configured to store a lubricating material, so that in a process of relative rotation between the rotating shaft 310 and the shaft hole 410, the lubricating material in the groove 311 can cover the outer wall of the rotating shaft 310 and the inner wall of the shaft hole 410, thereby enabling smoother relative rotation between the rotating shaft 310 and the shaft hole 410 while reducing wear, which is conducive to improving user experience.

For example, continuing to refer to FIG. 8 and FIG. 9, the groove 311 may be provided on the outer wall of the rotating shaft 310. Because the rotating shaft 310 is in tight fit with the shaft hole 410 (that is, interference fit), so that there is an interference allowance between the rotating shaft 310 and the shaft hole 410, an enclosed space is formed between the groove 311 on the rotating shaft 310 and the inner wall of the shaft hole 410. When the rotating shaft 310 rotates relative to the shaft hole 410, a region of the inner wall of the rotating shaft 310 opposite to the groove 311 can contact the lubricating material. Therefore, during a rotation process, the lubricating material added in the groove 311 can be applied to the inner wall of the shaft hole 410, and then applied to the outer wall of the rotating shaft, thereby playing a lubrication role between the rotating shaft 310 and the shaft hole 410.

In addition, because there is an interference allowance between the rotating shaft 310 and the shaft hole 410, in a relative rotation process of the rotating shaft 310 and the shaft hole 410, a damping force still exists, so that when the user rotates a display component more smoothly, the display component can be kept at any position.

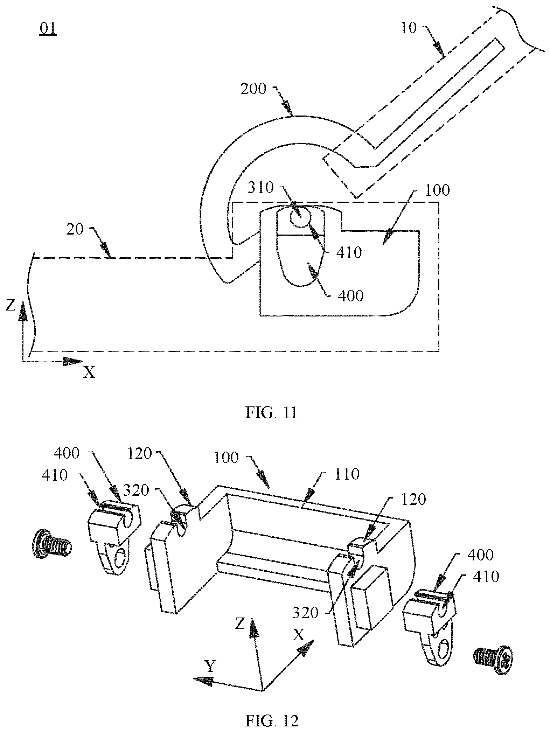

Based on this, referring to FIG. 10 and FIG. 11, FIG. 10 is a partial structural diagram of the electronic device 01 in a folded state according to an embodiment of this application, and FIG. 11 is a partial structural diagram of the electronic device 01 in an unfolded state according to an embodiment of this application. The electronic device 01 according to both FIG. 10 and FIG. 11 includes the hinge assembly 30 according to FIG. 5-FIG. 7.

In this way, the hinge assembly 30 according to an embodiment of this application fixedly connects the rotating base 200 and the display portion 10, and fixedly connects the base 100 and the keyboard portion 20, so that a rotary connection between the display portion 10 and the keyboard portion 20 can be implemented. In the hinge assembly 30, a rotary connection between the base 100 and the rotating base 200 is implemented through the rotating shaft 310 and the through hole 320. An integral structure is simple, and costs and an overall volume can be reduced, thereby facilitating overall thinning and lightening of the electronic device 01.

In addition, a fastening base 400 is further disposed on two sides of the base 100, and two ends of the rotating shaft 310 are respectively inserted into shaft holes 410 on corresponding fastening bases 400. In addition, the rotating shaft 310 is in interference fit with the shaft hole 410, that is, there is an interference allowance between the rotating shaft 310 and the shaft hole 410, so that when the rotating shaft 310 rotates relative to the shaft hole 410, a friction force can be generated, to form a damping force, and the display portion 10 can be kept at different positions relative to the keyboard portion 20, thereby improving user experience.

In addition, in an installation process, two ends of the rotating shaft 310 on the rotating base 200 may be respectively inserted into corresponding through holes 320. Because only plug-in fit is required between the through hole 320 and the rotating shaft 310, and no interference allowance is required, the rotating shaft 310 is inserted into the through hole 320, so that installation is convenient. Then, the fastening base 400 is sleeved onto the rotating shaft 310 through two ends of the rotating shaft 310 in the axial direction, and the fastening base 400 is in interference fit with the rotating shaft 310. This helps reduce overall installation difficulty.

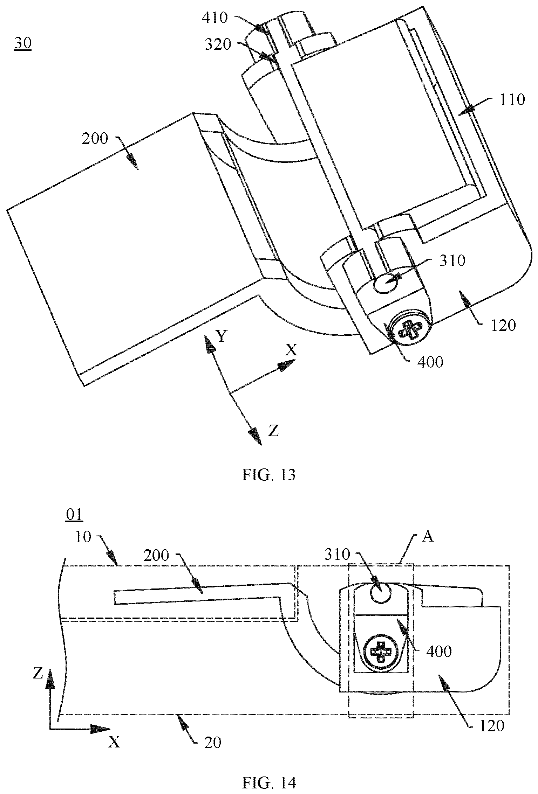

In some embodiments, referring to FIG. 12 and FIG. 13, FIG. 12 is an exploded view of another base 100 in the hinge assembly 30 according to an embodiment of this application, and FIG. 13 is a structural diagram of the hinge assembly 30 according to FIG. 12. The through hole 320 on the second portion 120 may extend along its radial direction and run through the side wall of the second portion 120. For example, the through hole 320 may extend in the Z-axis direction and run through an upper surface of the second portion 120. In this way, in a process of installing the rotating base 200, it is only necessary to place the rotating shaft 310 from a notch on the upper surface of the second portion 120 to the through hole 320, so that installation difficulty can be further reduced.

Then, the fastening base 400 is respectively installed at both ends of the rotating shaft 310, that is, the fastening base 400 is sleeved onto an end portion of the rotating shaft 310 along the axial direction of the rotating shaft 310, and there is an interference allowance between the fastening base 400 and the rotating shaft 310, thereby implementing tight fit. Finally, the fastening base 400 is fixedly connected to the corresponding second portion 120. For example, the fastening base 400 may be fixedly connected to the second portion 120 through a screw, or may be fixedly connected by means of welding, adhesion, or snap-fit connection.

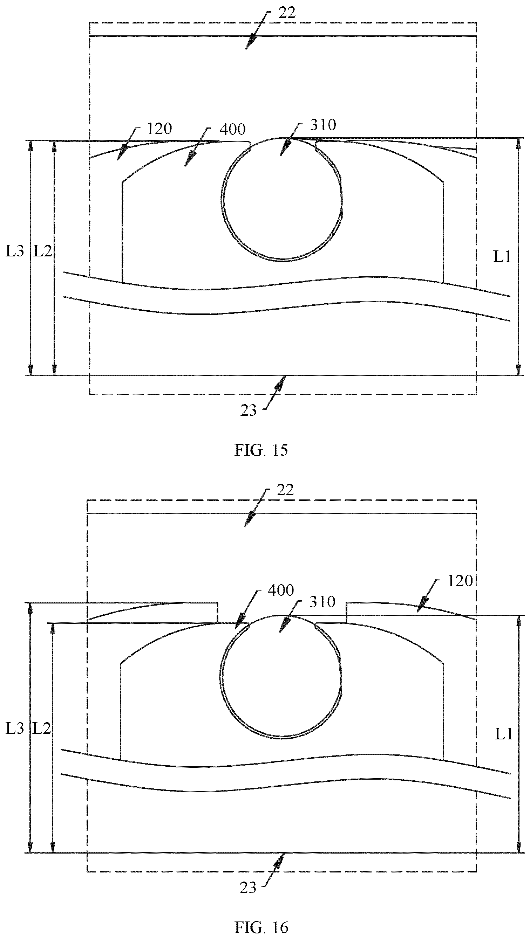

To reduce a thickness size of the electronic device 01, refer to FIG. 14 and FIG. 15. FIG. 14 is a partial structural diagram of another electronic device 01 (including the hinge assembly 30 according to FIG. 13) according to an embodiment of this application. FIG. 15 is a structural enlarged view of a region A according to FIG. 14, and a structure of an intermediate region in the Z-axis direction is omitted from the enlarged view according to FIG. 15 (the curve shown in the figure represents a cross-section). In a thickness direction of the electronic device 01, that is, the Z-axis direction, a highest point of the second portion 120 and a highest point of the fastening base 400 may be flush with a highest point of the rotating shaft 310. Alternatively, the highest point of the second portion 120 and the highest point of the fastening base 400 may be lower than the highest point of the rotating shaft 310. It may be understood that the highest point of the second portion 120, the highest point of the fastening base 400, and the highest point of the rotating shaft 310 refer to a point that is in the thickness direction (that is, a vertical direction) of the keyboard portion 20 and that is farthest from a bottom surface of the bottom case 23 when the hinge assembly 30 is installed in the bottom case 23 of the keyboard portion 20.

Specifically, a distance L3 between a top surface of the second portion 120 in the Z-axis direction and a bottom surface of the keyboard portion 20 (that is, the bottom surface of the bottom case 23) is less than or equal to a distance L1 between a vertex of the rotating shaft 310 and the bottom surface of the keyboard portion 20, thereby avoiding a large size of the second portion 120 in the Z-axis direction, which facilitates reducing the thickness size of the keyboard portion 20.

In addition, a distance L2 between a top surface of the fastening base 400 in the Z-axis direction and the bottom surface of the keyboard portion 20 (that is, the bottom surface of the bottom case 23) is less than or equal to the distance L1 between the vertex of the rotating shaft 310 and the bottom surface of the keyboard portion 20. In this structure, an opening is formed on a side that is of the shaft hole 410 provided on the fastening base 400 and that is away from the bottom surface of the bottom case 23, that is, the inner wall of the shaft hole 410 is an arc surface whose arc center angle is greater than 180° and less than 360°. For example, the arc center angle of the arc surface formed on the inner wall of the shaft hole 410 may be 270°, 280°, 290°, 300°, or 350°.

In this way, on the one hand, the rotating shaft 310 can still be in tight fit with the shaft hole 410, and when the rotating shaft 310 rotates relative to the shaft hole 410, a damping force can be formed. On the other hand, both the fastening base 400 and the second portion 120 form an opening structure, and the highest points thereof are lower than that of the rotating shaft 310, that is, the fastening base 400 and the second portion 120 are not disposed on a side of the rotating shaft 310 away from the bottom surface of the bottom case 23, which helps reduce the size of the hinge assembly 30 in the Z-axis direction, further helps reduce the thickness size of the keyboard portion 20, and facilitates thinning and lightening of the electronic device 01.

In some other possible examples, referring to FIG. 16, FIG. 16 is a partial structural enlarged view of still another electronic device 01 according to an embodiment of this application. The distance L3 between the top surface of the second portion 120 in the Z-axis direction and the bottom surface of the keyboard portion 20 may be greater than the distance L1 between the vertex of the rotating shaft 310 and the bottom surface of the keyboard portion 20, that is, L3>L1>L2. In this way, the top surface of the second portion 120 is higher than the vertex of the rotating shaft 310, so that mutual contact between the vertex of the rotating shaft 310 and an inner wall of the top case 22 of the keyboard portion 20 can be avoided, that is, the inner wall of the top case 22 can be prevented from hindering rotation of the rotating shaft 310, thereby ensuring normal rotation of the rotating shaft 310.

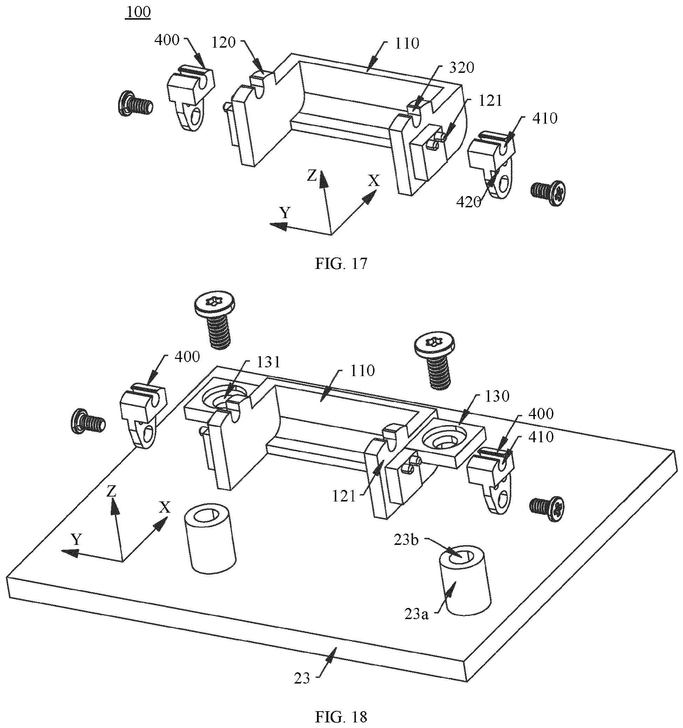

In some embodiments, referring to FIG. 17, FIG. 17 is an exploded view of still another base 100 in the hinge assembly 30 according to an embodiment of this application. A positioning shaft 121 and a positioning hole 420 may further be disposed between the second portion 120 of the base 100 and the fastening base 400, one of the positioning shaft 121 and the positioning hole 420 is disposed on the second portion 120, the other of the positioning shaft 121 and the positioning hole 420 is disposed on the fastening base 400, and the positioning shaft 121 is inserted into the positioning hole 420, thereby implementing pre-positioning between the base 100 and the fastening base 400.

In addition, a plurality of groups of positioning shafts 121 and positioning holes 420 may be disposed between the fastening base 400 and the second portion 120. In this way, the positioning shaft 121 and the positioning hole 420 can prevent relative movement between the second portion 120 and the fastening base 400 in a direction perpendicular to an axis of the positioning shaft 121 (that is, any direction in the XZ plane) during an installation process, to fasten the second portion 120 and the fastening base 400, thereby improving overall installation precision.

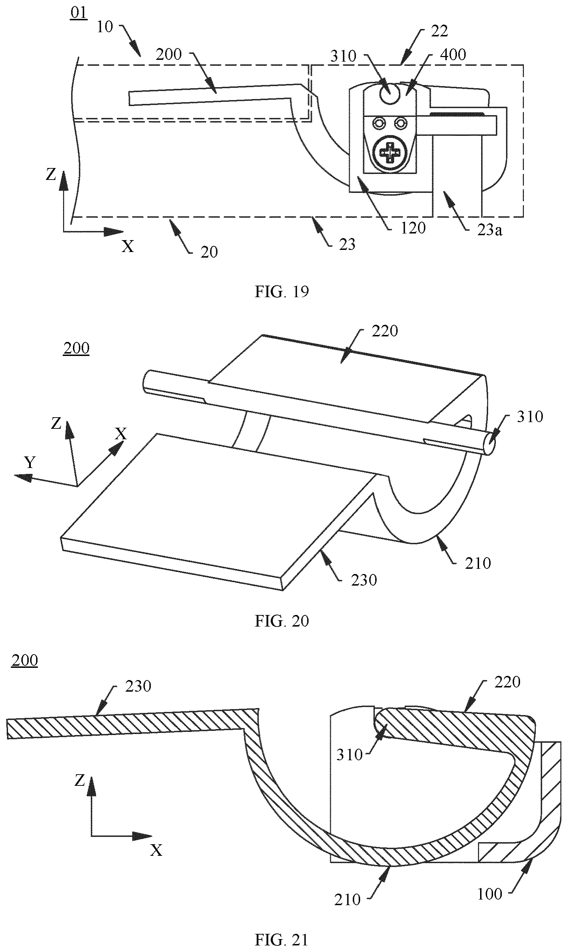

Based on this, referring to FIG. 18 and FIG. 19, FIG. 18 is an exploded view of still another base 100 in the hinge assembly 30 according to an embodiment of this application. FIG. 19 is a structural diagram of still another electronic device 01 (including the hinge assembly 30 according to FIG. 18) according to an embodiment of this application. The base 100 may further include a third portion 130. The third portion 130 may be disposed on each of surfaces of the two second portions 120 facing away from each other. The third portion 130 is configured to be fixedly connected to the keyboard portion 20 (that is, the first component), so that the base 100 is fixedly connected to the keyboard portion 20.

For example, the third portion 130 may be disposed on each of the surfaces of the two second portions 120 facing away from each other, and the third portion 130 and the second portion 120 may be fastened by means of gluing, snap-fit connection, welding, screw fastening, or the like. Alternatively, the third portion 130 and the second portion 120 may be integrally formed, that is, the third portion 130, the second portion 120, and the first portion 110 may form one structural member, to improve connection strength of an integral structure.

In addition, the third portion 130 may be fixedly connected to the keyboard portion 20 by means of gluing, snap-fit connection, welding, screw fastening, or the like. For example, continuing to refer to FIG. 18 and FIG. 19, the third portion 130 may be a plate-like structure, and parallel to the XY plane, and an installation hole 131 is provided on the third portion 130. A stud 23a is disposed on the bottom case 23 of the keyboard portion 20, and a threaded hole 23b is provided on the stud 23a. The third portion 130 is securely fastened to the stud 23a of the bottom case 23 through a screw, to implement a fixed connection between the base 100 and the bottom case 23.

In addition, the third portion 130 is disposed on each of both surfaces of the two second portions 120 facing away from each other, that is, two third portions 130 are distributed in the Y-axis direction, which facilitates force balance during a fixed connection between the base 100 and the bottom case 23, thereby improving connection reliability between the base 100 and the bottom housing 23.

Based on this, the foregoing describes the base 100 in the hinge assembly 30 in detail, and the following describes the rotating base 200 in the hinge assembly 30 in detail. Referring to FIG. 20 and FIG. 21, FIG. 20 is a structural diagram of the rotating base 200 in the hinge assembly 30 according to an embodiment of this application, and FIG. 21 is a cross-sectional structural diagram of the rotating base 200 according to FIG. 20 and the base 100 that are assembled.

The rotating base 200 may include an arcuate portion 210, a first connecting portion 220, and a second connecting portion 230. An axis of the arcuate portion 210 is parallel to the axis of the rotating shaft 310, that is, the axis of the arcuate portion 210 is disposed in the Y-axis direction. In a circumferential direction of the arcuate portion 210, a first end of the arcuate portion 210 is fixedly connected to the first connecting portion 220, and a second end of the arcuate portion 210 is fixedly connected to the second connecting portion 230. The rotating shaft 310 is fastened to the first connecting portion 220, and the second connecting portion 230 is fixedly connected to the display portion 10 (that is, the second component).

In some embodiments, the arcuate portion 210 may be an arc shape plate-like structure, for example, an arc center angle of the arc shape may be 180°. When the arcuate portion 210 rotates in its circumferential direction, a distance between the arcuate portion 210 and an adjacent component (for example, an inner wall of the first portion 110 of the base 100) can be the same, so that collision with another component can be avoided during rotation of the arcuate portion 210.

The rotating base 200 needs to rotate around the circumferential direction of the rotating shaft 310, that is, the axis of the rotating shaft 310 is an axis of relative rotation between the rotating base 200 and the base 100. Therefore, in an embodiment of this application, the axis of the arcuate portion 210 and the axis of the rotating shaft 310 may coincide with each other. In this way, in a process of the rotating base 200 rotating relative to the base 100, a distance (that is, a distance in the X-axis direction) between a part of the arcuate portion 210 between two second portions 120 and the first portion 110 of the base 100 is unchanged, that is, during a rotation process of the arcuate portion 210, collision with the first portion 110 of the base 100 is prevented, thereby ensuring that the rotating base 200 can rotate smoothly relative to the base 100.

For example, continuing to refer to FIG. 20 and FIG. 21, the first connecting portion 220 may be a plate-like structure, and is fastened at an edge of the first end of the arcuate portion 210 in the circumferential direction, and the first connecting portion 220 extends in a direction close to the axis of the arcuate portion 210. The rotating shaft 310 may be fastened on a side of the first connecting portion 220 away from the first end of the arcuate portion 210, so that the rotating shaft 310 and the arcuate portion 210 can be disposed coaxially.

In addition, the rotating shaft 310 may be an integral structure, and is fixedly connected to the first connecting portion 220. Two ends of the rotating shaft 310 extend in its axial direction, are respectively inserted into the through holes 320 on the two second portions 120, and are in tight fit with shaft holes 410 on two fastening bases 400. Alternatively, the rotating shaft 310 may also include two sub-rotating shafts, that is, axes of the two sub-rotating shafts are located in a same straight line, the two sub-rotating shafts are respectively fastened on two sides of the first connecting portion 220 in the axial direction of the arcuate portion 210, and each sub-rotating shaft is respectively connected to a corresponding second portion 120 and fastening base 400. Therefore, a specific structure of the rotating shaft 310 is not specifically limited in this application.

In addition, the second connecting portion 230 may also be a plate-like structure, and is fastened at an edge of the second end of the arcuate portion 210 in the circumferential direction. The second connecting portion 230 extends in a direction away from the axis of the arcuate portion 210. The second connecting portion 230 is configured to be fixedly connected to the second component, that is, the display portion 10, so that the rotating base 200 is fixedly connected to the display portion 10.

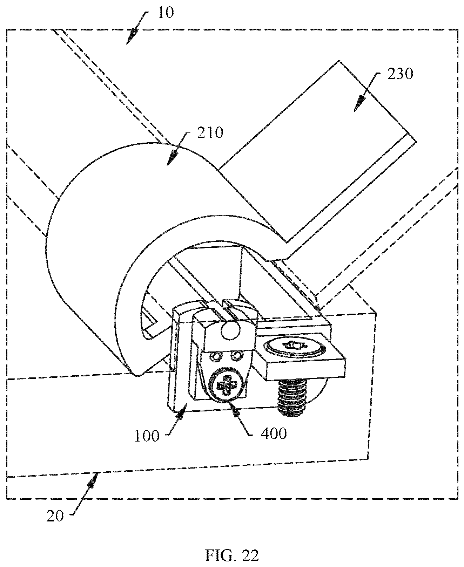

In some embodiments, referring to FIG. 22, FIG. 22 is a partial structural assembly diagram of the hinge assembly 30 according to FIG. 20, the display portion 10, and the keyboard portion 20. The second connecting portion 230 may be fixedly connected to the upper cover 11 (as shown in FIG. 1 and FIG. 2) of the display portion 10. For example, the second connecting portion 230 is fixedly connected to the upper cover 11 by means of gluing, snap-fit connection, screw connection, or welding. Therefore, a fixed connection can be implemented between the rotating base 200 and the display portion 10, so that the rotating base 200 can drive the display portion 10 to rotate, thereby realizing rotation of the display portion 10 of the electronic device 01 relative to the keyboard portion 20.

In addition, it may be learned from the foregoing that the display screen 12 of the display portion 10 and the mainboard disposed inside the keyboard portion 20 may be electrically connected by using a flexible connecting member (that is, the FPC board, not shown in the figure). To ensure overall aesthetics of the electronic device 01, the FPC board may be disposed on an inner surface of the arcuate portion 210. When the electronic device 01 is in an unfolded state, the arcuate portion 210 can shield the FPC board, to avoid exposure of the FPC board, thereby facilitating aesthetics.

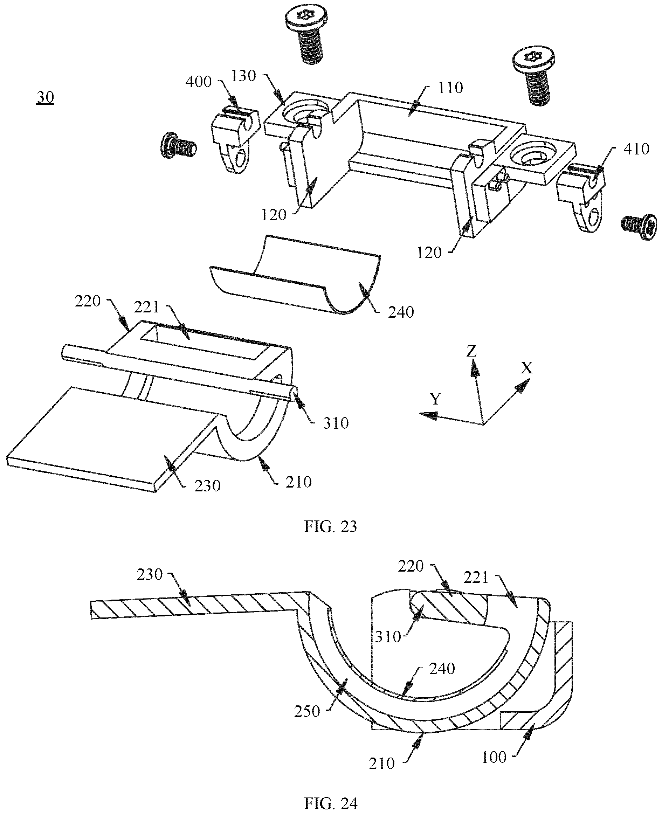

In addition, to facilitate disposing of the PFC board, refer to FIG. 23 and FIG. 24. FIG. 23 is an exploded view of another hinge assembly 30 according to an embodiment of this application. FIG. 24 is a cross-sectional structural diagram of the hinge assembly 30 according to FIG. 23. The first connecting portion 220 is further provided with an avoidance hole 221, and the FPC board passes through the avoidance hole 221, to avoid excessive bending of the FPC board between the mainboard and the display screen 12, thereby protecting integrity of the FPC board and reducing a risk of damage to the FPC board caused by bending.

Based on this, the rotating base 200 may further include an arcuate plate 240. The arcuate plate 240 is fixedly connected to the arcuate portion 210, and a clearance space 250 exists between the arcuate plate 240 and the inner wall of the arcuate portion 210. The clearance space 250 extends from the first end of the arcuate portion 210 to the second end of the arcuate portion 210, and an end portion of the clearance space 250 close to the first end of the arcuate portion 210 is opposite to the avoidance hole 221, that is, the clearance space 250 extends in the circumferential direction of the arcuate portion 210 and communicates with the avoidance hole 221. The FPC board may be disposed inside the clearance space 250.

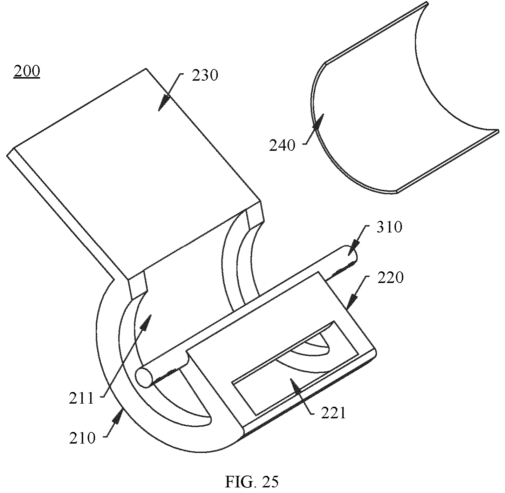

For example, referring to FIG. 25, FIG. 25 is an exploded view of another rotating base 200 according to an embodiment of this application. An arcuate groove 211 is formed on the inner wall of the arcuate portion 210, and extends in the circumferential direction of the arcuate portion 210 from the first end of the arcuate portion 210 to the second end of the arcuate portion 210. The arcuate plate 240 is spaced apart from a groove bottom of the arcuate groove 211, and is fixedly connected to the arcuate portion 210, so that the clearance space 250 is formed between the arcuate plate 240 and the groove bottom of the arcuate groove 211, as shown in FIG. 24.

In this way, the clearance space 250 forms an extension channel with two ends communicating with the outside, and one end of the extension channel communicates with the avoidance hole 221. Therefore, the FPC board is disposed inside the clearance space 250. On the one hand, the FPC board can be prevented from being exposed, which is conducive to overall beauty. On the other hand, the FPC board can be better protected to further reduce the risk of damage to the FPC board.

It should be noted that the FPC board is disposed inside the clearance space 250, but the FPC board and the rotating base 200 are not connected to each other, that is, the FPC board and the rotating base 200 are relatively not fixed. During rotation of the rotating base 200, the rotating base 200 rotates relatively to the FPC board, thereby preventing the FPC board from being pulled or strained, and further reducing the risk of damage to the FPC board.

In the description of this specification, specific features, structures, materials, or characteristics may be properly combined in any one or more embodiments or examples.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A hinge assembly, comprising:
a base, configured to be fixedly connected to a first component;
a rotating base, configured to be fixedly connected to a second component;
a rotating assembly, comprising a rotating shaft and a through hole, wherein one of the rotating shaft and the through hole is disposed on the base, and the other of the rotating shaft and the through hole is disposed on the rotating base; and the rotating shaft is inserted into the through hole, so that the base is rotatably connected to the rotating base; and
a fastening base, fixedly connected to the base, wherein a shaft hole is provided on the fastening base, and an end portion of the rotating shaft is inserted into the shaft hole; and the rotating shaft is in interference fit with the shaft hole.

2. The hinge assembly according to claim 1, wherein the shaft hole extends in a radial direction and runs through a surface of the fastening base to form an opening.

3. The hinge assembly according to claim 2, wherein in a vertical direction, a highest point of the fastening base is lower than a highest point of the rotating shaft.

4. The hinge assembly according to any one of claims 1~3, wherein two fastening bases are disposed, the two fastening bases are disposed on both sides of the base along an axial direction of the rotating shaft, and both ends of the rotating shaft are respectively inserted into the shaft holes on the two fastening bases.

5. The hinge assembly according to any one of claims 1~4, wherein the through hole extends in a radial direction of the rotating shaft and runs through a sidewall of the base.

6. The hinge assembly according to any one of claims 1~5, wherein the base comprises a first portion and two second portions, the two second portions are respectively disposed at two ends of the first portion along a first direction, the second portion is fixedly connected to the first portion, and the through hole is provided on the second portion; and the first direction is parallel to an axis of the rotating shaft; and
the rotating shaft is fastened to the rotating base, and two ends of the rotating shaft are respectively inserted into the through holes on the two second portions.

7. The hinge assembly according to claim 6, wherein the base further comprises a third portion, the third portion is fixedly disposed on each of surfaces of the two second portions facing away from each other, and the third portion is configured to be fixedly connected to the first component.

8. The hinge assembly according to any one of claims 1~7, wherein the rotating base comprises an arcuate portion and a first connecting portion, an axis of the arcuate portion is parallel to the axis of the rotating shaft, and the first connecting portion extends in a direction close to the axis of the arcuate portion; and along a circumferential direction of the arcuate portion, a first end of the arcuate portion is fixedly connected to the first connecting portion, the rotating shaft is fastened to the first connecting portion, and a second end of the arcuate portion is configured to be fixedly connected to the second component.

9. The hinge assembly according to claim 8, wherein the axis of the arcuate portion coincides with the axis of the rotating shaft.

10. The hinge assembly according to claim 8 or 9, wherein the rotating base further comprises a second connecting portion, the second connecting portion is fastened to the second end of the arcuate portion, and the second connecting portion is configured to be fixedly connected to the second component.

11. The hinge assembly according to any one of claims 8~10, wherein an avoidance hole is provided on the first connecting portion.

12. The hinge assembly according to claim 11, wherein the rotating base further comprises an arcuate plate, the arcuate plate is disposed inside the arcuate portion, the arcuate plate is fixedly connected to the arcuate portion, a clearance space exists between the arcuate plate and an inner wall of the arcuate portion, and the clearance space extends from the first end of the arcuate portion to the second end of the arcuate portion; and an end portion of the clearance space close to the first end of the arcuate portion is opposite to the avoidance hole, and the clearance space communicates with the avoidance hole.

13. The hinge assembly according to any one of claims 1~12, wherein the shaft hole is provided on the base, the rotating shaft is disposed on the rotating base, and the rotating shaft is integrally formed with the rotating base.

14. The hinge assembly according to any one of claims 1~13, wherein a positioning shaft and a positioning hole are disposed between the base and the fastening base, one of the positioning shaft and the positioning hole is disposed on the base, the other of the positioning shaft and the positioning hole is disposed on the fastening base, and the positioning shaft is inserted into the positioning hole.

15. The hinge assembly according to claim 14, wherein a plurality of groups of positioning shafts and positioning holes are disposed between the base and the fastening base.

16. The hinge assembly according to any one of claims 1~15, wherein a groove is provided on at least one of an outer wall of the rotating shaft facing the shaft hole and an inner wall of the shaft hole facing the rotating shaft, and the groove is configured to add a lubricating material.

17. An electronic device, comprising a keyboard portion, a display portion, and a hinge assembly, wherein the hinge assembly is the hinge assembly according to any one of claims 1~16, a base of the hinge assembly is fixedly connected to the keyboard portion, and a rotating base of the hinge assembly is fixedly connected to the display portion.

18. The electronic device according to claim 17, wherein the keyboard portion comprises a first region and a second region, and a thickness size of the first region is less than a thickness size of the second region; and
when the display portion and the keyboard portion are engaged with each other, the display portion is stacked with the first region.

19. The electronic device according to claim 18, wherein a sum of a thickness of the display portion and a thickness of the first region is equal to a thickness of the second region.

20. The electronic device according to claim 18, wherein an interface module is disposed in the second region, and a socket of the interface module is disposed on a surface of the second region away from the first region.

21. The electronic device according to any one of claims 17~20, wherein a plurality of hinge assemblies are disposed, and the plurality of hinge assemblies are spaced apart along a rotation axis between the display portion and the keyboard portion.
